# EUROPEAN PATENT SPECIFICATION

(11) **EP 4 448 424 B1**
(45) Date of publication and mention of the grant of the patent: **13.08.2025**
(21) Application number: 22830308.7
(22) Date of filing: 14.12.2022
(51) Int. Cl.: B65G 43/08, B07C 5/34, B65G 47/53, B65G 47/71, B65G 47/82, G01N 35/00

(54) **APPARATUS AND PROCESS FOR SORTING CONTAINERS OF BIOLOGICAL SAMPLES IN AN AUTOMATION SYSTEM OF AN ANALYSIS LABORATORY**
VORRICHTUNG UND VERFAHREN ZUM SORTIEREN VON BEHÄLTERN BIOLOGISCHER PROBEN IN EINEM AUTOMATISIERUNGSSYSTEM EINES ANALYSELABORS
APPAREIL ET PROCÉDÉ DE TRI DE RÉCIPIENTS D'ÉCHANTILLONS BIOLOGIQUES DANS UN SYSTÈME D'AUTOMATISATION D'UN LABORATOIRE D'ANALYSE

(30) Priority: 16.12.2021 IT 202100031598
(43) Date of publication of application: 23.10.2024
(73) Proprietor: Inpeco SA, 6883 Novazzano (CH)
(72) Inventor: CAMUSSO, Enrico, 10040 Val della Torre (Torino) (IT); GIOLO, Manuel, 10040 Val della Torre (Torino) (IT)
(74) Representative: Buzzi, Notaro & Antonielli d'Oulx S.p.A.
(86) International application number: PCT/IB2022/062209
(87) International publication number: WO 2023/111891

(56) References cited:
- EP-A1- 2 616 343
- EP-B1- 2 616 343
- DE-A1- 102013 220 682
- US-A- 4 798 095
- US-A- 5 445 037

## Description

### Field of the invention

The present invention refers to an apparatus for sorting containers of biological samples, for an automation system of an analysis laboratory, having the features indicated in the preamble of claim 1.

### Prior art

Nowadays, in the context of automated systems which are widely used in analysis laboratories of biological samples, it is increasingly felt the need to ensure in every situation a correct routing of containers of biological material (typically test tubes) towards an ever-increasing variety of operating modules present in the laboratory, responsible for carrying out operations of various kinds on the sample itself, whether they are pre-analysis, post-analysis, or analysis on the content of the biological sample.

In this sense, test tubes of different destinations can travel for large distances along a common path of an automation system, but then it must be ensured the correct sorting of each carrier and of the container housed on it, towards the module responsible for performing, on each biological sample, every specific operation among those present in the workflow of the sample itself.

Routing systems are already known, for example from patent US3796544A, which from a common transport line provide for a diversion, orthogonal to the direction of the aforementioned transport line, of the carriers with the related containers along different lanes or accumulation areas, according to different treatment logics for each group of samples, for example for the connection with different sample processing or analysis modules.

However, a solution of this type implies the use of mechanical details which do not allow the diversion of transport devices along these lanes or accumulation areas, except in two distinct passages, that is first by blocking their transit along the common transport line on which they travel and by proceeding only after with the diversion along the respective lane.

Other known systems carry out an "on the fly" diversion of the carriers with the tubes associated to them, but only with reference to the diversion of one or more carriers from a main transport line to a single auxiliary transport line. The carriers to be diverted are recognized along the main transport line, for example by means of an antenna arranged in a fixed position under the conveyor belt and able to detect an RFID identification tag carried by each carrier. The diversion is performed by driving mechanical means for pushing the carrier. The detection of the carrier is performed in a region sufficiently spaced upstream of the diversion point, so as to ensure that the diversion mechanism has sufficient time to activate upon the actual arrival of the carrier to be diverted. An example of such known diverter systems is illustrated in the patent EP 2 780 724 B1 by the same Applicant.

However, this kind of solution gives problems, since a "one to one" matching between each detector device (for example an antenna) and the related diverter device is essential. That is, at different diversion points along a laboratory automation system there must always be a detector upstream of the diversion point, to manage the diversions that should or should not occur at each point.

This naturally leads to having to replicate, at each portion of the automation system where a diversion of samples is necessary, all the hardware components and the software operating logic, thus leading to an increase in costs.

Furthermore, the known systems are able to manage always and only a single type of carrier to be diverted.

Last but not least, the known systems used to divert the carriers can push them too hard, from one lane to another, causing problems of leakage of biological material ("spillage") from the test tubes housed in the carriers, in cases in which these travel uncapped along the conveyor belt of the laboratory automation system.

An apparatus according to the preamble of claim 1 and a process according to the preamble of claim 8 is known from document US 4 798 095 A.

### Object of the invention

The object of the present invention is to create an apparatus for the selective sorting of biological samples towards a plurality of sorting lines in an analysis laboratory automation system, which ensures a correct and reliable diversion of samples towards the respective destination lines, without the need to stop the flow of samples and regardless of their frequency of arrival at the apparatus.

A further object is to provide, in view of such plurality of different sorting lines along which the biological samples must be diverted, and therefore in view of a plurality of possible final destinations for the biological samples, a single detector device upstream of the diversion area of biological samples.

Another object is to manage, by means of a single apparatus, different types of carriers carrying the test tubes containing biological samples.

Another object is to realize a compact and at the same time modular apparatus, which therefore can be adapted to possible reconfigurations with reference to the arrangement of the modules which are present in the analysis laboratory, for example their addition or removal.

Last but not least purpose is to ensure that the diversion operation takes place in such a way as to avoid any risk of leakage of biological material from the sorted test tubes, in case they travel uncapped along the automation system.

### Summary of the invention

In view of achieving one or more of the aforementioned objects, the invention provides an apparatus according to claim 1

In one embodiment, the diverter member of each diverter device has a front surface with a side wing protruding from the front wall, on a downstream side of the diverter member, with reference to the direction of movement of the transport line, in such a way that when the diverter member stops in the position in the middle of the transport line, said side wing acts as a stop wall to intercept a carrier in transit, while the front surface pushes the intercepted carrier in the respective sorting line during the second forward movement of the diverter member.

In the preferred embodiment, along the transport line, immediately upstream of each sorting line, a sensor is arranged which is able to detect the transit of the carriers, said electronic controller being configured to receive the signal of the transit of the carriers from said sensor and to activate the diverter member, associated with the sorting line to which each carrier is destined, with a predetermined delay with respect to the signal of the passage.

In one embodiment, said transport line includes, upstream of the sorting lines, and upstream of said detector device, a stop gate, which can be moved by means of an actuator between a closed condition of obstruction of the transport line, in which an accumulation of carriers forms against the stop gate, and an open condition, the actuator of said stop gate being controlled by an electronic controller in such a way as to intermittently open the stop gate, whereby downstream of the stop gate the transport line advances the carriers in the direction of the sorting lines in positions spaced apart from each other.

The invention also provides a sorting process according to claim 8 carried out by means of the above described apparatus.

### Detailed description of a preferred embodiment

Further features and advantages of the invention will emerge from the following description with reference to the accompanying drawings, provided purely by way of non-limiting example, in which:
- figure 1 is a perspective view of a preferred embodiment of the sorting apparatus according to the invention,
- figure 2 shows an enlarged detail of an automation system according to the invention,
- figure 3 represents a perspective view of a detail of the sorting apparatus of figure 1,
- figure 4 shows in a front view a diverter according to the invention,
- figure 5 is a rotated view of the diverter of figure 4, sectioned along the line V-V,
- figure 6 is a top view of the diverter of figure 4, - figures 6A, 6B 6C show in a plan view three different operating positions of a diverter member,
- figure 7 is a perspective view of an alternative embodiment of the sorting apparatus according to the invention, and
- figure 8 is a diagram illustrating the variations over time of the position and speed of a diverter member during the diversion of a carrier in the respective sorting line, with reference to an embodiment.

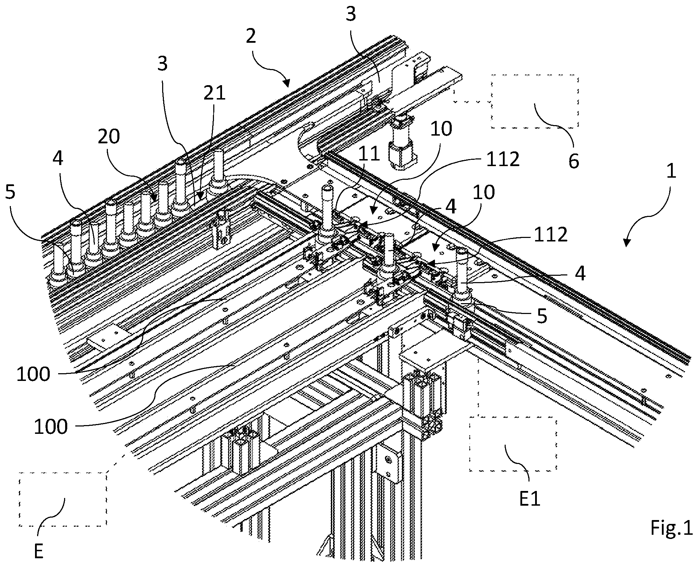

In figure 1, which illustrates a preferred embodiment of the invention, the number 1 indicates as a whole an apparatus for sorting biological samples, used in an automation system 2 of an analysis laboratory.

Along such automation system 2 travel, on conveyor belts 3 substantially forming different routing lanes of biological samples, containers of biological material 4, advantageously test tubes, containing biological samples of different patients, which must be sent to a plurality of modules 6 (one of which is schematically illustrated in the form of a dashed block) of pre-analysis, analysis or post-analysis which interface with the automation system 2.

Each test tube 4 travels along the automation system 2 inserted in a carrier 5 of a suitable shape, in the example of circular shape, which is dragged by the conveyor belt 3 thus realizing the movement of the biological samples from one point to another of the automation system 2.

It is obvious that different test tubes 4, in relation to the various analyses to be eventually performed in succession on the biological sample contained therein, must undergo different processing and therefore different routing.

For this purpose, the laboratory automation system 2 advantageously comprises a main transport line 20 to manage the transfer of the biological samples from the module 6 to the following one. The main line 20 then branches out in correspondence with each of the modules 6 into a plurality of auxiliary lines along which to divert the biological samples which must be processed by a specific module 6.

The routing of the biological samples along the automation is managed by the electronic controller E of the automation system (schematically shown as a dashed block in figure 1). The electronic controller E knows at all times the position of each circulating carrier 5 with the respective test tube 4 and manages each routing thereof.

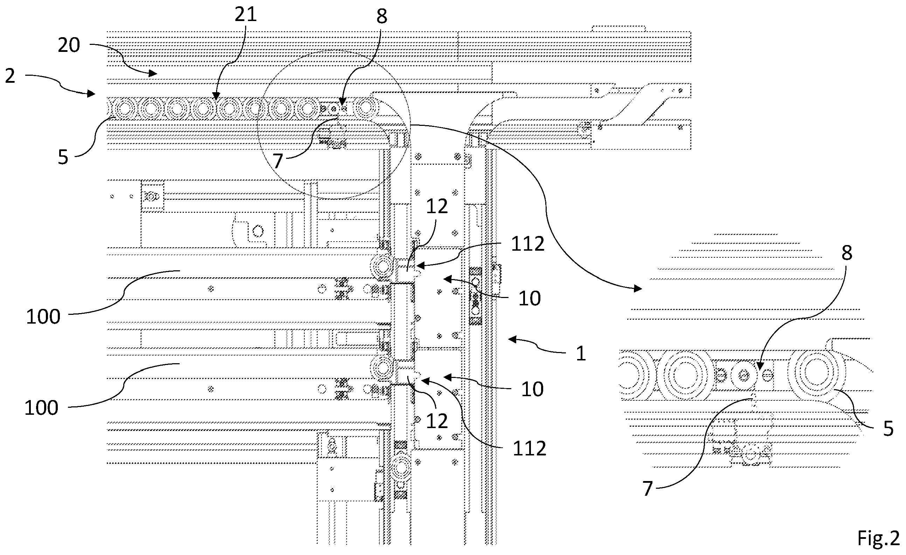

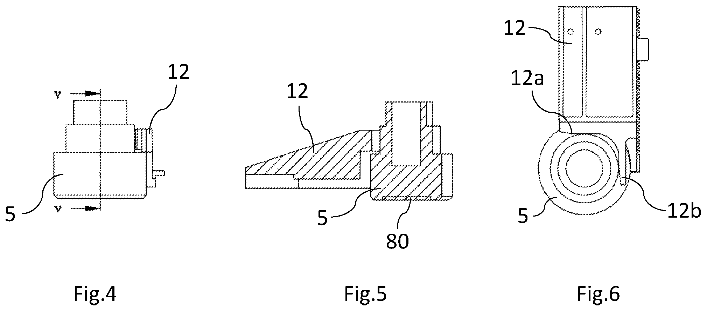

In a preferred embodiment, the carriers 5 are therefore diverted from the main line 20 to an auxiliary line (for example through a diversion mechanism similar to that described in the aforementioned patent EP 2 780 724 B1 by the Applicant) of the automation system 2 , until they accumulate along it, being blocked by a stop gate 7 which protrudes from the section of the automation system 2 (see detail in figure 2) and advantageously detected at the same time by an antenna 8 in a position below the conveyor belt and able to carry out a detection of the carrier 5 by interfacing with an identifier 80 (for example an RFID tag) of to the latter (figure 5).

Specifically, the sorting apparatus 1 object of this invention is a particular embodiment of such module 6 along which to route a plurality of transport devices 5 with test tube 4 in view of the following selective routing of these transport devices 5 along the different paths downstream of the sorting apparatus 1. Such selective routing is managed by an electronic controller E1 (schematically illustrated in figure 1) specific to the apparatus 1.

In particular, the sorting apparatus 1 comprises a transport line 21 having a first portion corresponding to the aforementioned auxiliary line along which the stop gate 7 and the related antenna 8 are arranged, and a second portion, preferably orthogonal to the first portion and connected to it by a 90° curve, interfaced to a plurality of sorting units 10, each of which in turn faces a sorting line 100 to which the diverted carrier devices 5 are directed downstream, each of these lines 100 representing therefore a specific routing path of biological samples, uniform among them for the processing which they must be subjected to or in any case generically for the routing they must undergo.

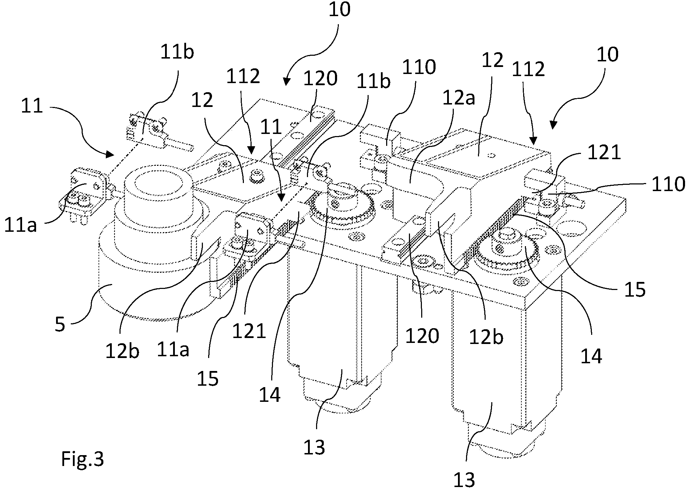

Each sorting unit 10 comprises an activation sensor 11 able to detect the passage of a carrier 5 and consequently to control a diverter device 112, comprising a diverter member 12 which routes the carrier 5 along the respective line 100. In the preferred embodiment, illustrated in detail in figure 3, the activation sensor 11 consists of an emitter 11a able to emit a signal which, depending on whether or not it is received by a receiver 11b, just allows to detect the passage of the carrier 5.

Each sorting unit 10 provides, downstream of the activation sensor 11, the diverter member 12 driven by an electric motor 13 which is controlled by the electronic controller E1 and which sets in rotation a pinion 14 which, engaging with a rack 15 integral with the diverter member 12, causes its movement in both directions, forward and backward, along a sliding track 120, in a direction perpendicular to the direction of the transport line 21.

The rest position, i.e. of complete retreat of the diverter member 12 is discriminated by the engagement of a flap 121 of the diverter member 12 with a presence sensor 110 positioned near the rear stroke end of the sliding track 120.

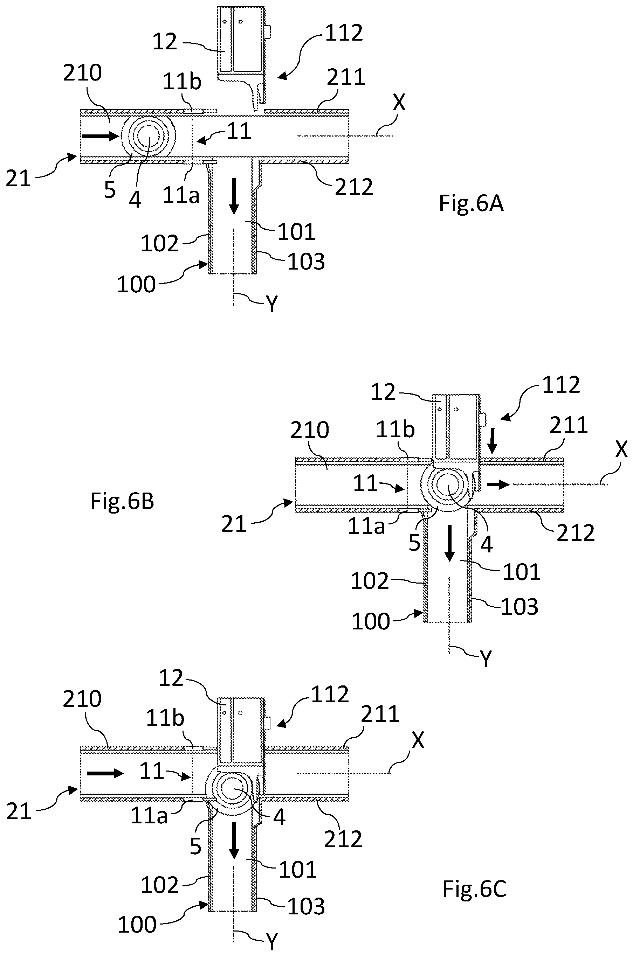

With reference again to figures 6A, 6B, 6C, the transport line 21 of the apparatus according to the invention comprises a conveyor belt 210 on which are transported, in an aligned succession along a substantially horizontal transport direction X, a plurality of carriers 5 each arranged to receive and stably support a container (for example a test tube) for a biological sample. The transport line 21 comprises a guide lane for the carriers 5 transported on the conveyor belt 210 defined by two side walls 211, 212 which extend above and on both sides of the conveyor belt 210, between which the carriers 5 are guided. The sorting lines 100 are parallel to each other and spaced apart and extend from successive areas of the transport line 21, on one side of the transport line 21, in substantially horizontal directions and substantially orthogonal to the direction X of the transport line 21. Each sorting line 100 includes a conveyor belt 101 substantially coplanar with the conveyor belt 210 of the transport line 21 and orthogonal thereto. The conveyor belt 101 has an input end adjacent to an area of the transport line 21 at which the side wall 212 of the transport line 21, which is disposed on the side facing the sorting line 100, has a interruption, to allow the passage of the carriers 5 routed to the sorting line 100. Even each sorting line 100 comprises a guide lane defined by two walls 102, 103 extending above and on both sides of the conveyor belt 101.

With reference again to figure 6, the embodiment of the diverter member 12 which is illustrated therein has a front surface 12a with a lateral wing 12b which frontally protrudes from a downstream side of the front surface 12a (with reference to the direction of movement of the carrier 5 along the transport line 21). In this way, when the diverter member 12 advances through the transport line 21, the lateral wing 12b acts as a stop wall to intercept a carrier in transit (see figure 6B) while the front surface 12a pushes the intercepted carrier 5 towards the respective sorting line 100 (figure 6C).

The electronic controller E1 is configured to cause a forward movement of the diverter member 12, when the diverter member 12 is activated, which includes a first advance, from the backward position shown in figure 6A up to a first position, illustrated in figure 6B , in the middle of the transport line 21, wherein the diverter member 12 remains static for a not null time, to intercept an incoming carrier 5, without causing a collision against the carrier in the transversal direction. The movement of the diverter member 12 then continues with a second further forward movement up to the advanced position of figure 6C in which it pushes the intercepted carrier in the respective sorting line 100, with a speed that progressively increases, starting from zero.

In the following, a description will be provided concerning the use of the preferred embodiment of the apparatus 1 for sorting biological samples in an analysis laboratory, represented in figures 1 to 6. However, this application is not to be intended in a limiting sense, since the device 1 can also be used for the selective sorting along a plurality of paths, for example different lanes, of other types of objects.

The sorting apparatus 1 receives biological samples circulating along the automation system 2. In particular, such biological samples contained in test tubes 4 which are in turn associated with a respective carrier 5 have been previously diverted from the main transport line 20 of the automation system 2 to the auxiliary line interfacing with the apparatus 1, according to the logic established by the electronic controller E of system 2.

The carriers 5, once diverted along the transport line 21, accumulate along it and are blocked at the stop gate 7 and from there detected through the antenna 8 arranged below the conveyor belt (figure 2), which communicates with the RFID tag 80 associated with each carrier 5.

This operation substantially confirms the successful passage of an expected carrier 5 with the related test tube 4, preparing the sorting apparatus 1 for the following management of each carrier. The electronic controller E of the automation system 2 in fact already has before the information related to the association between each carrier 5 and the related test tube 4 and consequently gives this information to the electronic controller E1 of the sorting apparatus 1 so that, when later each biological sample arrives thereto, it is suitably sorted along the expected path indicated by the electronic controller E.

Once the detection by the antenna 8 of the carrier 5 stopped at the stop gate 7 has been obtained, it is released and therefore proceeds towards the sorting apparatus 1.

As mentioned, the apparatus 1 comprises a plurality of sorting units 10 and naturally, due to the above-mentioned information exchanges, the apparatus 1 knows along which of the sorting lines 100, associated with each unit 10, the incoming carrier 5 must be diverted.

As soon as the carrier 5 crosses the first sorting unit 10 that it meets along the way, its passage is detected by the activation sensor 11.

If the carrier 5 must be diverted along the sorting line 100 associated with such unit 10, the electronic controller E1 controls the exit of the diverter member 12 (figure 3), which is positioned slightly downstream of the activation sensor 11, and carries out the diversion of the carrier 5 in the sorting line 100.

It is obvious that the electronic controller E1, through the appropriate setting of the distance between the activation sensor 11 and the diverter member 12 of each sorting unit 10, acts in such a way as to allow a diversion perfectly synchronized with the effective passage of the carrier 5 at the diverter member 12.

If, on the other hand, that specific carrier has to be processed by a following sorting unit 10, the electronic controller E1 naturally does not control the exit of the diverter, allowing the biological sample to pass to the following sorting unit 10, until it finds the one in charge of diverting it.

It should be noted that the action of the diverter member 12 on the carrier 5 substantially consists of an abutment action against its side surface, while it is passing, and of a subsequent accompanying movement along the sorting line 100 (figures 6A, 6B , 6C): this double action avoids too sudden pushes which could lead, especially in the case of sorting of test tubes 4 which circulate uncapped along the automation system 2, to the leakage of the biological sample ("spillage") during this operation.

In any case, the speed of action of each diverter member 12 should be pointed out since when it comes out to divert the carrier 5, its retreat must be almost immediate, given that the frequency with which the carriers 5 are released from the stop gate 7 and routed to the sorting apparatus 1 is very high and therefore it is possible that, in sequence, a new carrier 5 which must be routed to the next sorting unit 10 is immediately arriving and therefore its passage should not be hindered.

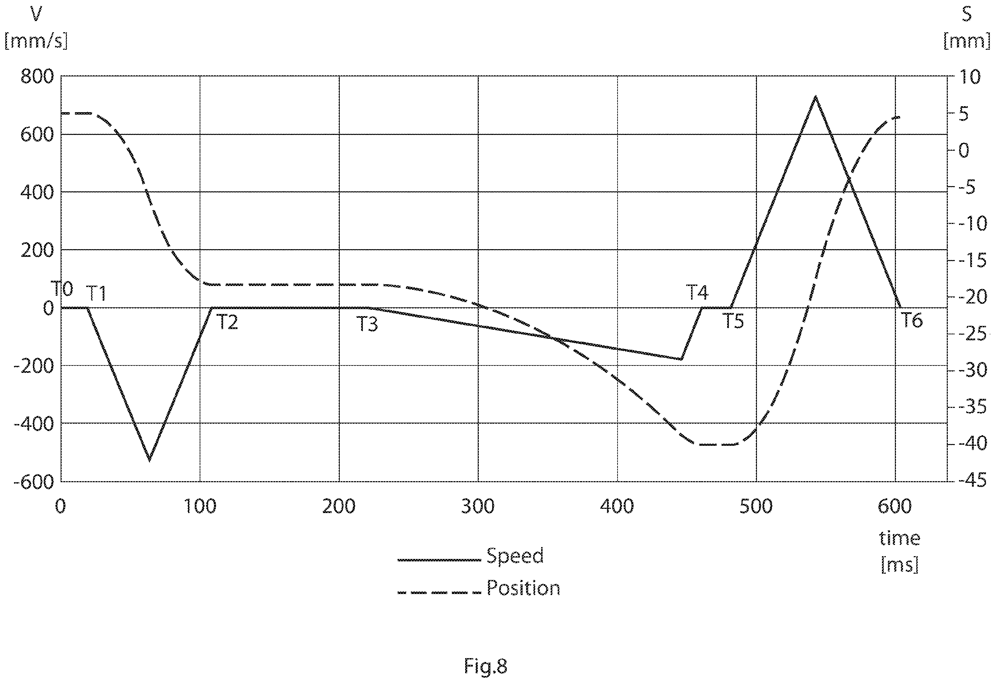

Figure 8 of the annexed drawings shows the variations over time of the position s and the speed V of a diverter member 12 during the diversion of a carrier 5 in the respective sorting line, in case of a preferred embodiment.

In the diagram of figure 8, conventionally, the zero shift corresponds to a position advanced by 5 mm with respect to the rearmost position of the diverter member (see the y-axis on the right in the diagram). Furthermore, again by convention, the shifts of the diverter member starting from the zero position in the direction of the transport line have a negative sign. For the same reason, the speed is negative when the diverter member moves forward to divert a carrier and positive as the diverter member returns to its inoperative backward position.

As can be seen in the diagram of Figure 8, at time T0 the diverter member 12 is in its inoperative backward position, where it remains static until time T1, waiting for the arrival of a carrier to be diverted. From time T1 to time T2, the diverter member advances up to the position in the middle of the transport line, accelerating and then slowing down until it stops in this position, where it remains static from time T2 to time T3 waiting that the carrier 5 to be diverted arrives against the lateral wing 12b of the diverter member 12 (see figure 6). In this way, when the carrier 5 arrives against the wing 12b, the diverter member 12 is static and therefore does not produce any lateral collision against the carrier which would cause instability for the container and a possible leakage of the content outside the container. From time T3 to time T4 the diverter member progressively increases its speed, with an acceleration in the order of 740 - 760 mm/ s² (preferably 750 mm/ s²) and then slows down again until it stops in the position of maximum advancement. From time T4 to time T5 the diverter member is static in the position of maximum advancement, and from time T5 to time T6 it returns to its inoperative backward position with a strong acceleration followed by a strong deceleration, so as to clear the transport line for the passage of other carriers.

As can be seen from the above description, the solution is highly modular, being able to provide any number of sorting units 10 constituting the apparatus 1, whilst always providing for a single upstream detection by a single antenna 8.

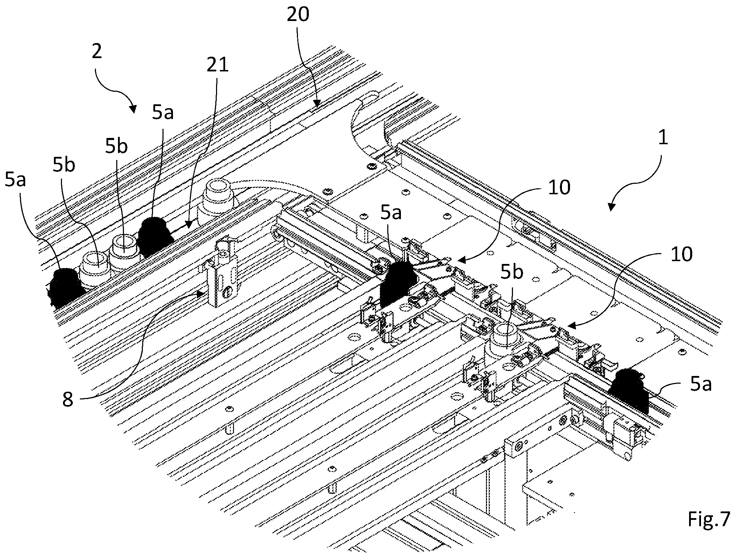

In an alternative embodiment, illustrated by way of example in figure 7, the management by a single sorting apparatus 1 of carriers 5a and 5b of different sizes, naturally to be routed to different lines 100 of different widths, can be provided, the apparatus itself in this case being eventually configured as an interface between different automation systems 2, placed side by side in a laboratory and just using different types of carriers 5a and 5b.

As evident from the preceding description, the apparatus according to the invention allows a precise sorting of transport devices with test tubes, diverting them as necessary towards a plurality of possible different downstream paths, in accordance with the routing logic of the whole automation system.

Moreover, with a single upstream detection of the transport devices by the antenna, a potentially infinite number of sorting units suitable for the above purpose can be controlled, according to a modularity principle which is particularly useful in case of changes to the spatial configuration of the modules in the laboratory (e.g. addition or removal of one of them).

An evident further advantage linked to the modularity of the apparatus is also, as it has been seen, the possibility of adapting it to the sorting of different types of transport devices, each transportable by different automation systems, the sorting apparatus acting in this case as real interface between different automation systems.

Furthermore, the push movement by each diverter on the carrier essentially acts in accompaniment, thus avoiding sudden pushes and any problem of leakage of biological material ("spillage") from uncapped test tubes.

Studies and experiences conducted by the Applicant have shown that the use of an apparatus such as the one described above allows to considerably increase the productivity and efficiency of an analysis laboratory, since the carriers with test tubes can be conveyed towards one or more apparatuses arranged along an automation system, thus concentrating the sample sorting operations in a very compact space in a branched way and towards a multitude of paths and final destinations.

## Claims

1. Apparatus (1) for sorting containers of biological samples, for an automation system (2) of an analysis laboratory, said apparatus comprising:
- a transport line (21) of containers of biological samples, including:
- a plurality of carriers (5) each arranged to receive and stably support a container (4) for a biological sample,
- a conveyor belt (210) on which said carriers (5) are transported, in an aligned succession along a substantially horizontal transport direction (X), and
- a guide lane of the carriers (5) transported on said conveyor belt (210), defined by two side walls (211, 212) extending above and at the two sides of the conveyor belt (210), between which the carriers (5) are guided,
- a plurality of parallel sorting lines (100) spaced apart from each other, extending from a succession of areas of said transport line (21), on a side of the transport line (21), in directions (Y) substantially horizontal and substantially orthogonal to the direction (X) of transport of said transport line (21),
- each sorting line (100) including:
- a conveyor belt (101) substantially coplanar with the conveyor belt (210) of said transport line (21) and orthogonal thereto, having an inlet end adjacent to an area of said transport line (21) at which the side wall (212) of the transport line arranged on the side facing the sorting line (100) has an interruption, for the passage of the carriers (5) addressed to the sorting line,
- a guide lane of the sorting line (100), defined by two side walls (102, 103) extending above and at the two sides of the conveyor belt (101) of the sorting line (100), between which the carriers (5) transported along the sorting line (100) are guided,
- a respective diverter device (112) associated with each sorting line (100) and arranged adjacent to said area of the transport line (21) from which the sorting line (100) starts, on the side opposite to said sorting line (100), said diverter device (112) comprising a diverter member (12) transversely movable to the transport line (21) from an inoperative backward position to an advanced position in which it is able to divert a carrier (5) from the transport line (21) to the sorting line (100), and an actuator (13-15) of the movement of the diverter member (12),
- said apparatus further comprising:
- at least one detector device (8) along said transport line (21), upstream of said sorting lines (100), configured to detect an information support (80) carried by each carrier (5), and
- an electronic controller (E1) configured and programmed to receive from said detector device (8) an identifying information of each carrier (5) and to consequently control the actuators (13-15) of said diverter members (12), in such a way as to cause the diversion of each carrier (5) towards a selected sorting line (100), to which the carrier (5) is destined,
said apparatus being **characterized in that**:
said electronic controller (E1) is configured to control the actuators (13-15) of said diverter members (12) in such a way that each diverter member, when activated, has a forward movement which includes a first movement up to a first position in the middle of the transport line (21), wherein the diverter member remains static for a not null time, to intercept an upcoming carrier (5), so as to avoid a cross collision with the intercepted carrier (5) such as to induce an instability of the container (4) carried by the carrier (5) and a second further movement up to the aforesaid advanced position, to push the intercepted carrier (5) in the respective sorting line (100),
said transport line (21) is configured to sufficiently space from each other the transported carriers (5) in order to allow each diverter member (12) to perform the aforesaid first forward movement, to stop in said position in the middle of the transport line (21), to carry out the aforesaid second forward movement and then a return movement to its inoperative backward position, without interfering with the carrier (5) that follows the diverted carrier along the transport line.

2. Apparatus according to claim 1, **characterized in that** the diverter member (12) of each diverter device (112) has a front surface (12a) with a lateral wing (12b) protruding from the front wall, on a downstream side of the diverter member (12), with reference to the direction of movement of the transport line (21),
in such a way that when the diverter member (12) stops in the aforesaid position in the middle of the transport line (21), said lateral wing (12b) acts as a stop wall to intercept a carrier (5) in transit, while the front surface (12a) pushes the intercepted carrier (5) in the respective sorting line (100) during the aforesaid second forward movement of the diverter member (12).

3. Apparatus according to claim 1 or 2, **characterized in that** during said second forward movement, the speed of the diverter member (12) progressively increases, with a constant acceleration in the order of 740 - 760 mm/s², preferably 750 mm/s².

4. Apparatus according to claim 1, **characterized in that** along the transport line (21), immediately upstream of each sorting line (100), it is arranged a sensor (11) able to detect the transit of carriers (5), said electronic controller (E1) being configured to receive the signal of the passage of the carriers (5) from said sensor (11) and to activate the diverter member (12) associated with the sorting line (100) to which each carrier (5) is destined with a predetermined delay with respect to the signal of the passage.

5. Apparatus according to claim 1, **characterized in that** said transport line (21) includes, upstream of the sorting lines (100), and upstream of said detector device (8), a stop gate (7), movable by means of an actuator between a closed obstruction condition of the transport line (21), in which a stack of carriers (5) is formed against the stop gate (7), and an open condition,
the actuator of said stop gate (7) being controlled by an electronic controller (E) in such a way as to intermittently open the stop gate (7), so that downstream of the stop gate (7) the transport line (21) advances the carriers (5) towards the sorting lines (100) in positions that are spaced apart from each other.

6. Apparatus according to claim 5, **characterized in that** said transport line (21) is configured in such a way as to show a first portion of the transport line, along which said stop gate (7) with said detector device (8) is arranged, and a second portion of the transport line, orthogonal to the first portion and connected to it by a 90° curve, in such a way that the sorting lines (100) extend parallel to said first portion of the transport line (21).

7. Apparatus according to claim 6, **characterized in that** said first portion of the transport line is an auxiliary line parallel to a main transport line (20) of an automation system (2) of an analysis laboratory.

8. Process for sorting containers of biological samples in an automation system (2) of an analysis laboratory, said process comprising the steps of:
- preparing a transport line (21) of containers of biological samples, including:
- a conveyor belt (210) on which are transported, in an aligned succession along a substantially horizontal transport direction (X), a plurality of carriers (5) each arranged to receive and stably support a container (4) for a biological sample, and
- a guide lane of the carriers (5) transported on said conveyor belt (210), defined by two side walls (211, 212) extending above and at the two sides of the conveyor belt (210), between which the carriers (5) are guided,
said process further comprising the steps of:
- arranging a plurality of parallel sorting lines (100) spaced apart from each other, extending from a succession of areas of said transport line (21), on a side of the transport line (21), in directions (Y) substantially horizontal and substantially orthogonal to the direction (X) of said transport line,
- in which each sorting line includes:
- a conveyor belt (101) substantially coplanar with the conveyor belt (210) of said transport line (21) and orthogonal thereto, having an inlet end adjacent to an area of said transport line (21) at which the side wall (212) of the transport line arranged on the side facing the sorting line (100) has an interruption, for the passage of the carriers (5) addressed to the sorting line (100),
- a guide lane of the sorting line (100), defined by two side walls (102, 103) extending above and at the two sides of the conveyor belt of the sorting line (100), between which the carriers (5) transported along the sorting line (100) are guided,
- a respective diverter device (112) associated with each sorting line (100) and arranged adjacent to said area of the transport line (21) from which the sorting line (100) starts, on the side opposite to said sorting line (100), said diverter device (112) comprising a diverter member (12) transversely movable to the transport line (21) from an inoperative backward position to an advanced position in which it is able to divert a carrier (5) from the transport line (21) to the sorting line (100), and an actuator (13-15) of the movement of the diverter member (12),
said process further comprising the steps of:
- detecting, through at least one detector device (8), along said transport line (21), upstream of said sorting lines (100), an information support (80) carried by each carrier (5), and
- receiving in an electronic controller (E1), from said detector device (8), an identifying information of each carrier (5) and controlling, through said electronic controller (E1), the actuators (13-15) of said diverter members (12), in such a way as to cause the diversion of each carrier (5) towards a selected sorting line (100), to which the carrier (5) is destined,
said process being **characterized in that**:
each diverter member, when activated, has a forward movement which includes a first movement up to a first position in the middle of the transport line (21), wherein the diverter member remains static for a not null time, to intercept an upcoming carrier (5), so as to avoid a cross collision with the intercepted carrier (5) such as to induce an instability of the container (4) carried by the carrier (5) and a second further movement up to the aforesaid advanced position, to push the intercepted carrier (5) in the respective sorting line (100),
the carriers (5) transported on said transport line (21) are sufficiently space from each other in order to allow each diverter member (12) to perform the aforesaid first forward movement, to stop in said position in the middle of the transport line (21), to carry out the aforesaid second forward movement and then a return movement to its inoperative backward position, without interfering with the carrier (5) that follows the intercepted carrier along the transport line.

9. Process according to claim 8, **characterized in that** the diverter member (12) of each diverter device (112) has a front surface (12a) with a lateral wing (12b) protruding from the front wall, on a downstream side of the diverter member (12), with reference to the direction of movement of the transport line (21),
in such a way that when the diverter member (12) stops in the aforesaid position in the middle of the transport line (21), said lateral wing (12b) acts as a stop wall to intercept a carrier (5) in transit, while the front surface (12a) pushes the intercepted carrier (5) in the respective sorting line (100) during the aforesaid second forward movement of the diverter member (12).

10. Process according to claim 8 or 9, **characterized in that** during said second forward movement, the speed of the diverter member (12) progressively increases, with a constant acceleration in the order of 740 - 760 mm/s², preferably 750 mm/s².

## Patentansprüche

1. Einrichtung (1) zum Sortieren von Behältern biologischer Proben für ein Automatisierungssystem (2) eines Analyselabors, wobei die Einrichtung umfasst:
- eine Transportlinie (21) von Behältern biologischer Proben, die Folgendes einschließt:
- eine Vielzahl von Trägern (5), die jeweils so angeordnet sind, dass sie einen Behälter (4) für eine biologische Probe aufnehmen und stabil stützen,
- ein Förderband (210), auf dem die Träger (5) in einer ausgerichteten Abfolge entlang einer im Wesentlichen horizontalen Transportrichtung (X) transportiert werden, und
- eine Führungsspur der auf dem Förderband (210) transportierten Träger (5), die durch zwei Seitenwände (211, 212) definiert ist, die sich oberhalb und an den beiden Seiten des Förderbands (210) erstrecken, zwischen denen die Träger (5) geführt werden,
- eine Vielzahl paralleler Sortierlinien (100), die voneinander beabstandet sind und sich von einer Abfolge von Bereichen der Transportlinie (21) auf einer Seite der Transportlinie (21) in Richtungen (Y) erstrecken, die im Wesentlichen horizontal und im Wesentlichen orthogonal zur Transportrichtung (X) der Transportlinie (21) sind,
- wobei jede Sortierlinie (100) Folgendes einschließt:
- ein Förderband (101), das im Wesentlichen koplanar mit dem Förderband (210) der Transportlinie (21) und orthogonal dazu ist, und ein Einlassende neben einem Bereich der Transportlinie (21) aufweist, an dem die auf der der Sortierlinie (100) zugewandten Seite angeordnete Seitenwand (212) der Transportlinie eine Unterbrechung für den Durchgang der für die Sortierlinie bestimmten Träger (5) aufweist,
- eine Führungsspur der Sortierlinie (100), die durch zwei Seitenwände (102, 103) definiert ist, die sich oberhalb und an den beiden Seiten des Förderbandes (101) der Sortierlinie (100) erstrecken, zwischen denen die entlang der Sortierlinie (100) transportierten Träger (5) geführt werden,
- eine jeweilige Umlenkvorrichtung (112), die jeder Sortierlinie (100) zugeordnet ist und neben dem Bereich der Transportlinie (21), von der die Sortierlinie (100) ausgeht, auf der der Sortierlinie (100) gegenüberliegenden Seite angeordnet ist, wobei die Umlenkvorrichtung (112) ein Umlenkelement (12), das quer zur Transportlinie (21) aus einer hinteren Ruheposition in eine vorgeschobene Position bewegbar ist, in der es einen Träger (5) von der Transportlinie (21) zu der Sortierlinie (100) umlenken kann, sowie einen Aktuator (13-15) für die Bewegung des Umlenkelements (12) umfasst,
- wobei die Einrichtung weiter umfasst:
- mindestens eine Detektorvorrichtung (8) entlang der Transportlinie (21), stromaufwärts der Sortierlinien (100), die dazu konfiguriert ist, einen von jedem Träger (5) getragenen Informationsträger (80) zu erfassen, und
- eine elektronische Steuereinheit (E1), die dazu konfiguriert und programmiert ist, von der Detektorvorrichtung (8) eine Identifizierungsinformation jedes Trägers (5) zu empfangen und daraufhin die Aktuatoren (13-15) der Umlenkelemente (12) derart zu steuern, dass bewirkt wird, dass jeder Träger (5) zu einer ausgewählten Sortierlinie (100) umgelenkt wird, für die der Träger (5) bestimmt ist,
wobei die Einrichtung **dadurch gekennzeichnet, dass**:
die elektronische Steuereinheit (E1) dazu konfiguriert ist, die Aktuatoren (13-15) der Umlenkelemente (12) derart zu steuern, dass jedes Umlenkelement bei Aktivierung eine Vorwärtsbewegung aufweist, die eine erste Bewegung bis zu einer ersten Position in der Mitte der Transportlinie (21) einschließt, in der das Umlenkelement für eine Zeit, die nicht Null ist, statisch bleibt, um einen herankommenden Träger (5) abzufangen, um eine Querkollision mit dem abgefangenen Träger (5) zu vermeiden, um eine Instabilität des vom Träger (5) getragenen Behälters (4) zu erzeugen, und eine zweite weitere Bewegung bis zur vorgenannten vorgeschobenen Position, um den abgefangenen Träger (5) in die jeweilige Sortierlinie (100) zu schieben,
wobei die Transportlinie (21) dazu konfiguriert ist, die transportierten Träger (5) ausreichend voneinander zu beabstanden, um jedem Umlenkelement (12) zu ermöglichen, die vorgenannte erste Vorwärtsbewegung durchzuführen, in der Position in der Mitte der Transportlinie (21) anzuhalten, die vorgenannte zweite Vorwärtsbewegung und dann eine Rückwärtsbewegung in seine hintere Ruheposition auszuführen, ohne den Träger (5) zu behindern, der dem umgelenkten Träger entlang der Transportlinie folgt.

2. Einrichtung nach Anspruch 1, **dadurch gekennzeichnet, dass** das Umlenkelement (12) jeder Umlenkvorrichtung (112) eine Vorderfläche (12a) mit einem seitlichen Flügel (12b) aufweist, der von der Vorderwand auf einer stromabwärtigen Seite des Umlenkelements (12) in Bezug auf die Bewegungsrichtung der Transportlinie (21) derart vorsteht,
dass, wenn das Umlenkelement (12) in der vorgenannten Position in der Mitte der Transportlinie (21) anhält, der seitliche Flügel (12b) als Anschlagwand fungiert, um einen Träger (5) auf dem Transportweg abzufangen, während die Vorderfläche (12a) den abgefangenen Träger (5) während der vorgenannten zweiten Vorwärtsbewegung des Umlenkelements (12) in die jeweilige Sortierlinie (100) schiebt.

3. Einrichtung nach Anspruch 1 oder 2, **dadurch gekennzeichnet, dass** während der zweiten Vorwärtsbewegung die Geschwindigkeit des Umlenkelements (12) mit einer konstanten Beschleunigung in der Größenordnung von 740 - 760 mm/s², vorzugsweise 750 mm/s², progressiv zunimmt.

4. Einrichtung nach Anspruch 1, **dadurch gekennzeichnet, dass** entlang der Transportlinie (21), unmittelbar stromaufwärts jeder Sortierlinie (100), ein Sensor (11) angeordnet ist, der den Transit von Trägern (5) erfassen kann, wobei die elektronische Steuereinheit (E1) dazu konfiguriert ist, das Signal des Durchgangs der Träger (5) von dem Sensor (11) zu empfangen, und das der Sortierlinie (100) zugeordnete Umlenkelement (12), für das jeder Träger (5) bestimmt ist, mit einer vorbestimmten Verzögerung in Bezug auf das Durchgangssignal zu aktivieren.

5. Einrichtung nach Anspruch 1, **dadurch gekennzeichnet, dass** die Transportlinie (21) stromaufwärts der Sortierlinien (100) und stromaufwärts der Detektorvorrichtung (8) eine Anschlagsperre (7) einschließt, die mittels eines Aktuators zwischen einem geschlossenen Blockadezustand der Transportlinie (21), in dem sich ein Stapel von Trägern (5) gegen die Anschlagsperre (7) bildet, und einem offenen Zustand bewegbar ist,
wobei der Aktuator der Anschlagsperre (7) durch eine elektronische Steuereinheit (E) derart gesteuert wird, dass er die Anschlagsperre (7) intermittierend öffnet, so dass die Transportlinie (21) die Träger (5) stromabwärts der Anschlagsperre (7) in voneinander beabstandeten Positionen in Richtung der Sortierlinien (100) befördert.

6. Einrichtung nach Anspruch 5, **dadurch gekennzeichnet, dass** die Transportlinie (21) derart konfiguriert ist, dass sie einen ersten Abschnitt der Transportlinie zeigt, entlang dem die Anschlagsperre (7) mit der Detektorvorrichtung (8) angeordnet ist, und einen zweiten Abschnitt der Transportlinie, der orthogonal zum ersten Abschnitt ist und mit diesem durch eine 90°-Kurve derart verbunden ist, dass sich die Sortierlinien (100) parallel zum ersten Abschnitt der Transportlinie (21) erstrecken.

7. Einrichtung nach Anspruch 6, **dadurch gekennzeichnet, dass** der erste Abschnitt der Transportlinie eine Hilfslinie parallel zu einer Haupttransportlinie (20) eines Automatisierungssystems (2) eines Analyselabors ist.

8. Prozess zum Sortieren von Behältern biologischer Proben in einem Automatisierungssystem (2) eines Analyselabors, wobei der Prozess die Schritte umfasst:
- Vorbereiten einer Transportlinie (21) von Behältern biologischer Proben, die Folgendes einschließt:
- ein Förderband (210), auf dem in ausgerichteter Abfolge entlang einer im Wesentlichen horizontalen Transportrichtung (X) eine Vielzahl von Trägern (5) transportiert werden, die jeweils so angeordnet sind, dass sie einen Behälter (4) für eine biologische Probe aufnehmen und stabil stützen, und
- eine Führungsspur der auf dem Förderband (210) transportierten Träger (5), die durch zwei Seitenwände (211, 212) definiert ist, die sich oberhalb und an den beiden Seiten des Förderbands (210) erstrecken, zwischen denen die Träger (5) geführt werden,
wobei der Prozess weiter die Schritte umfasst:
- Anordnen einer Vielzahl paralleler Sortierlinien (100), die voneinander beabstandet sind und sich von einer Abfolge von Bereichen der Transportlinie (21) auf einer Seite der Transportlinie (21) in Richtungen (Y) erstrecken, die im Wesentlichen horizontal und im Wesentlichen orthogonal zur Richtung (X) der Transportlinie sind,
- wobei jede Sortierlinie einschließt:
- ein Förderband (101), das im Wesentlichen koplanar mit dem Förderband (210) der Transportlinie (21) und orthogonal dazu ist, und ein Einlassende neben einem Bereich der Transportlinie (21) aufweist, an dem die auf der der Sortierlinie (100) zugewandten Seite angeordnete Seitenwand (212) der Transportlinie eine Unterbrechung für den Durchgang der für die Sortierlinie (100) bestimmten Träger (5) aufweist,
- eine Führungsspur der Sortierlinie (100), die durch zwei Seitenwände (102, 103) definiert ist, die sich oberhalb und an den beiden Seiten des Förderbandes der Sortierlinie (100) erstrecken, zwischen denen die entlang der Sortierlinie (100) transportierten Träger (5) geführt werden,
- eine jeweilige Umlenkvorrichtung (112), die jeder Sortierlinie (100) zugeordnet ist und neben dem Bereich der Transportlinie (21), von der die Sortierlinie (100) ausgeht, auf der der Sortierlinie (100) gegenüberliegenden Seite angeordnet ist, wobei die Umlenkvorrichtung (112) ein Umlenkelement (12) umfasst, das quer zur Transportlinie (21) aus einer hinteren Ruheposition in eine vorgeschobene Position bewegbar ist, in der es einen Träger (5) von der Transportlinie (21) zu der Sortierlinie (100) umlenken kann, sowie einen Aktuator (13-15) für die Bewegung des Umlenkelements (12) umfasst,
wobei der Prozess weiter die Schritte umfasst:
- Erfassen eines von jedem Träger (5) getragenen Informationsträgers (80) entlang der Transportlinie (21) stromaufwärts der Sortierlinien (100) durch mindestens eine Detektorvorrichtung (8), und
- Empfangen einer Identifizierungsinformation jedes Trägers (5) von der Detektorvorrichtung (8) in einer elektronischen Steuereinheit (E1) und Steuern der Aktuatoren (13 - 15) der Umlenkelemente (12) durch die elektronische Steuereinheit (E1) derart, dass die Umlenkung jedes Trägers (5) zu einer ausgewählten Sortierlinie (100) bewirkt wird, für die der Träger (5) bestimmt ist,
wobei der Prozess **dadurch gekennzeichnet, dass**:
jedes Umlenkelement bei Aktivierung eine Vorwärtsbewegung aufweist, die eine erste Bewegung bis zu einer ersten Position in der Mitte der Transportlinie (21) einschließt, in der das Umlenkelement für eine Zeit, die nicht Null ist, statisch bleibt, um einen herankommenden Träger (5) abzufangen, um eine Querkollision mit dem abgefangenen Träger (5) zu vermeiden, um eine Instabilität des vom Träger (5) getragenen Behälters (4) zu erzeugen, und eine zweite weitere Bewegung bis zur vorgenannten vorgeschobenen Position, um den abgefangenen Träger (5) in die jeweilige Sortierlinie (100) zu schieben,
wobei die auf der Transportlinie (21) transportierten Träger (5) ausreichend voneinander beabstandet sind, um jedem Umlenkelement (12) zu ermöglichen, die vorgenannte erste Vorwärtsbewegung durchzuführen, in der Position in der Mitte der Transportlinie (21) anzuhalten, die vorgenannte zweite Vorwärtsbewegung und dann eine Rückwärtsbewegung in seine hintere Ruheposition auszuführen, ohne den Träger (5) zu behindern, der dem abgefangenen Träger entlang der Transportlinie folgt.

9. Prozess nach Anspruch 8, **dadurch gekennzeichnet, dass** das Umlenkelement (12) jeder Umlenkvorrichtung (112) eine Vorderfläche (12a) mit einem seitlichen Flügel (12b) aufweist, der von der Vorderwand auf einer stromabwärtigen Seite des Umlenkelements (12) in Bezug auf die Bewegungsrichtung der Transportlinie (21) derart vorsteht,
dass, wenn das Umlenkelement (12) in der vorgenannten Position in der Mitte der Transportlinie (21) anhält, der seitliche Flügel (12b) als Anschlagwand fungiert, um einen Träger (5) auf dem Transportweg abzufangen, während die Vorderfläche (12a) den abgefangenen Träger (5) während der vorgenannten zweiten Vorwärtsbewegung des Umlenkelements (12) in die jeweilige Sortierlinie (100) schiebt.

10. Prozess nach Anspruch 8 oder 9, **dadurch gekennzeichnet, dass** während der zweiten Vorwärtsbewegung die Geschwindigkeit des Umlenkelements (12) mit einer konstanten Beschleunigung in der Größenordnung von 740 - 760 mm/s², vorzugsweise 750 mm/s², progressiv zunimmt.

## Revendications

1. Appareil (1) de tri de récipients d'échantillons biologiques, pour un système d'automatisation (2) d'un laboratoire d'analyse, ledit appareil comprenant :
- une ligne de transport (21) de récipients d'échantillons biologiques, comprenant :
- une pluralité de transporteurs (5) agencés chacun pour recevoir et supporter de manière stable un récipient (4) pour un échantillon biologique,
- une bande transporteuse (210) sur laquelle lesdits transporteurs (5) sont transportés, dans une succession alignée le long d'une direction de transport sensiblement horizontale (X), et
- une voie de guidage des transporteurs (5) transportés sur ladite bande transporteuse (210), définie par deux parois latérales (211, 212) s'étendant au-dessus et au niveau des deux côtés de la bande transporteuse (210), entre lesquelles les transporteurs (5) sont guidés,
- une pluralité de lignes de tri parallèles (100) espacées les unes des autres, s'étendant à partir d'une succession de zones de ladite ligne de transport (21), sur un côté de la ligne de transport (21), dans des directions (Y) sensiblement horizontales et sensiblement orthogonales à la direction (X) de transport de ladite ligne de transport (21),
- chaque ligne de tri (100) comprenant :
- une bande transporteuse (101) sensiblement coplanaire avec la bande transporteuse (210) de ladite ligne de transport (21) et orthogonale à celle-ci, ayant une extrémité d'entrée adjacente à une zone de ladite ligne de transport (21) au niveau de laquelle la paroi latérale (212) de la ligne de transport agencée sur le côté faisant face à la ligne de tri (100) a une interruption, pour le passage des transporteurs (5) adressés à la ligne de tri,
- une voie de guidage de la ligne de tri (100), définie par deux parois latérales (102, 103) s'étendant au-dessus et au niveau des deux côtés de la bande transporteuse (101) de la ligne de tri (100), entre lesquelles les transporteurs (5) transportés le long de la ligne de tri (100) sont guidés,
- un dispositif de déviation respectif (112) associé à chaque ligne de tri (100) et agencé de manière adjacente à ladite zone de la ligne de transport (21) à partir de laquelle la ligne de tri (100) commence, sur le côté opposé à ladite ligne de tri (100), ledit dispositif de déviation (112) comprenant un élément de déviation (12) mobile transversalement à la ligne de transport (21) d'une position arrière non fonctionnelle à une position avancée dans laquelle il est capable de dévier un transporteur (5) de la ligne de transport (21) à la ligne de tri (100), et un actionneur (13-15) du mouvement de l'élément de déviation (12),
- ledit appareil comprenant en outre :
- au moins un dispositif de détection (8) le long de ladite ligne de transport (21), en amont desdites lignes de tri (100), configuré pour détecter un support d'informations (80) porté par chaque transporteur (5), et
- un dispositif de commande électronique (E1) configuré et programmé pour recevoir à partir dudit dispositif de détection (8) une information d'identification de chaque transporteur (5) et pour commander par conséquent les actionneurs (13-15) desdits éléments de déviation (12), de manière à provoquer la déviation de chaque transporteur (5) vers une ligne de tri sélectionnée (100), à laquelle le transporteur (5) est destiné,
ledit appareil étant **caractérisé en ce que** :
ledit dispositif de commande électronique (E1) est configuré pour commander les actionneurs (13-15) desdits éléments de déviation (12) de manière à ce que chaque élément de déviation, lorsqu'il est activé, ait un mouvement vers l'avant qui comprend un premier mouvement jusqu'à une première position au milieu de la ligne de transport (21), où l'élément de déviation reste statique pendant un temps non nul, pour intercepter un transporteur à venir (5), afin d'éviter une collision croisée avec le transporteur intercepté (5) de manière à induire une instabilité du récipient (4) porté par le transporteur (5) et un second mouvement supplémentaire jusqu'à la position avancée susmentionnée, pour pousser le transporteur intercepté (5) dans la ligne de tri respective (100),
ladite ligne de transport (21) est configurée pour espacer suffisamment les transporteurs transportés (5) les uns des autres afin de permettre à chaque élément de déviation (12) de réaliser le premier mouvement vers l'avant susmentionné, de s'arrêter dans ladite position au milieu de la ligne de transport (21), d'effectuer le second mouvement vers l'avant susmentionné et ensuite un mouvement de retour à sa position arrière non fonctionnelle, sans interférer avec le transporteur (5) qui suit le transporteur dévié le long de la ligne de transport.

2. Appareil selon la revendication 1, **caractérisé en ce que** l'élément de déviation (12) de chaque dispositif de déviation (112) a une surface avant (12a) avec une aile latérale (12b) faisant saillie depuis la paroi avant, sur un côté aval de l'élément de déviation (12), par rapport à la direction de mouvement de la ligne de transport (21),
de manière à ce que, lorsque l'élément de déviation (12) s'arrête dans la position susmentionnée au milieu de la ligne de transport (21), ladite aile latérale (12b) agisse comme une paroi d'arrêt pour intercepter un transporteur (5) en transit, tandis que la surface avant (12a) pousse le transporteur intercepté (5) dans la ligne de tri respective (100) pendant le second mouvement vers l'avant susmentionné de l'élément de déviation (12).

3. Appareil selon la revendication 1 ou 2, **caractérisé en ce que**, pendant ledit second mouvement vers l'avant, la vitesse de l'élément de déviation (12) augmente progressivement, avec une accélération constante de l'ordre de 740 - 760 mm/s², de préférence 750 mm/s².

4. Appareil selon la revendication 1, **caractérisé en ce que**, le long de la ligne de transport (21), immédiatement en amont de chaque ligne de tri (100), est agencé un capteur (11) capable de détecter le transit de transporteurs (5), ledit dispositif de commande électronique (E1) étant configuré pour recevoir le signal du passage des transporteurs (5) dudit capteur (11) et pour activer l'élément de déviation (12) associé à la ligne de tri (100) à laquelle chaque transporteur (5) est destiné avec un retard prédéterminé par rapport au signal du passage.

5. Appareil selon la revendication 1, **caractérisé en ce que** ladite ligne de transport (21) comprend, en amont des lignes de tri (100), et en amont dudit dispositif de détection (8), une porte d'arrêt (7), mobile au moyen d'un actionneur entre un état d'obstruction fermé de la ligne de transport (21), où une pile de transporteurs (5) est formée contre la porte d'arrêt (7), et un état ouvert,
l'actionneur de ladite porte d'arrêt (7) étant commandé par un dispositif de commande électronique (E) de manière à ouvrir la porte d'arrêt (7) par intermittence, de sorte qu'en aval de la porte d'arrêt (7), la ligne de transport (21) fasse avancer les transporteurs (5) vers les lignes de tri (100) dans des positions qui sont espacées les unes des autres.

6. Appareil selon la revendication 5, **caractérisé en ce que** ladite ligne de transport (21) est configurée de manière à présenter une première partie de la ligne de transport, le long de laquelle ladite porte d'arrêt (7) avec ledit dispositif de détection (8) est agencée, et une seconde partie de la ligne de transport, orthogonale à la première partie et reliée à celle-ci par une courbe de 90°, de manière à ce que les lignes de tri (100) s'étendent parallèlement à ladite première partie de la ligne de transport (21).

7. Appareil selon la revendication 6, **caractérisé en ce que** ladite première partie de la ligne de transport est une ligne auxiliaire parallèle à une ligne de transport principale (20) d'un système d'automatisation (2) d'un laboratoire d'analyse.

8. Procédé de tri de récipients d'échantillons biologiques dans un système d'automatisation (2) d'un laboratoire d'analyses, ledit procédé comprenant les étapes :
- de préparation d'une ligne de transport (21) de récipients d'échantillons biologiques, comprenant :
- une bande transporteuse (210) sur laquelle sont transportés, dans une succession alignée le long d'une direction de transport sensiblement horizontale (X), une pluralité de transporteurs (5) agencés chacun pour recevoir et supporter de manière stable un récipient (4) pour un échantillon biologique, et
- une voie de guidage des transporteurs (5) transportés sur ladite bande transporteuse (210), définie par deux parois latérales (211, 212) s'étendant au-dessus et au niveau des deux côtés de la bande transporteuse (210), entre lesquelles les transporteurs (5) sont guidés,
ledit procédé comprenant en outre les étapes :
- d'agencement d'une pluralité de lignes de tri parallèles (100) espacées les unes des autres, s'étendant à partir d'une succession de zones de ladite ligne de transport (21), sur un côté de la ligne de transport (21), dans des directions (Y) sensiblement horizontales et sensiblement orthogonales à la direction (X) de ladite ligne de transport,
- où chaque ligne de tri comprend :
- une bande transporteuse (101) sensiblement coplanaire avec la bande transporteuse (210) de ladite ligne de transport (21) et orthogonale à celle-ci, ayant une extrémité d'entrée adjacente à une zone de ladite ligne de transport (21) au niveau de laquelle la paroi latérale (212) de la ligne de transport agencée sur le côté faisant face à la ligne de tri (100) a une interruption, pour le passage des transporteurs (5) adressés à la ligne de tri (100),
- une voie de guidage de la ligne de tri (100), définie par deux parois latérales (102, 103) s'étendant au-dessus et au niveau des deux côtés de la bande transporteuse de la ligne de tri (100), entre lesquelles les transporteurs (5) transportés le long de la ligne de tri (100) sont guidés,
- un dispositif de déviation respectif (112) associé à chaque ligne de tri (100) et agencé de manière adjacente à ladite zone de la ligne de transport (21) à partir de laquelle la ligne de tri (100) commence, sur le côté opposé à ladite ligne de tri (100), ledit dispositif de déviation (112) comprenant un élément de déviation (12) mobile transversalement à la ligne de transport (21) d'une position arrière non fonctionnelle à une position avancée dans laquelle il est capable de dévier un transporteur (5) de la ligne de transport (21) à la ligne de tri (100), et un actionneur (13-15) du mouvement de l'élément de déviation (12),
ledit procédé comprenant en outre les étapes :
- de détection, par au moins un dispositif de détection (8), le long de ladite ligne de transport (21), en amont desdites lignes de tri (100), d'un support d'informations (80) porté par chaque transporteur (5), et
- de réception dans un dispositif de commande électronique (E1), à partir dudit dispositif de détection (8), d'une information d'identification de chaque transporteur (5) et de commande, par ledit dispositif de commande électronique (E1), des actionneurs (13-15) desdits éléments de déviation (12), de manière à provoquer la déviation de chaque transporteur (5) vers une ligne de tri sélectionnée (100), à laquelle le transporteur (5) est destiné,
ledit procédé étant **caractérisé en ce que** :
chaque élément de déviation, lorsqu'il est activé, a un mouvement vers l'avant qui comprend un premier mouvement jusqu'à une première position au milieu de la ligne de transport (21), où l'élément de déviation reste statique pendant un temps non nul, pour intercepter un transporteur à venir (5), afin d'éviter une collision croisée avec le transporteur intercepté (5) de manière à induire une instabilité du récipient (4) porté par le transporteur (5) et un second mouvement supplémentaire jusqu'à la position avancée susmentionnée, pour pousser le transporteur intercepté (5) dans la ligne de tri respective (100),
les transporteurs (5) transportés sur ladite ligne de transport (21) sont suffisamment espacés les uns des autres afin de permettre à chaque élément de déviation (12) de réaliser le premier mouvement vers l'avant susmentionné, de s'arrêter dans ladite position au milieu de la ligne de transport (21), d'effectuer le second mouvement vers l'avant susmentionné et ensuite un mouvement de retour à sa position arrière non fonctionnelle, sans interférer avec le transporteur (5) qui suit le transporteur intercepté le long de la ligne de transport.

9. Procédé selon la revendication 8, **caractérisé en ce que** l'élément de déviation (12) de chaque dispositif de déviation (112) a une surface avant (12a) avec une aile latérale (12b) faisant saillie depuis la paroi avant, sur un côté aval de l'élément de déviation (12), par rapport à la direction de mouvement de la ligne de transport (21),
de manière à ce que, lorsque l'élément de déviation (12) s'arrête dans la position susmentionnée au milieu de la ligne de transport (21), ladite aile latérale (12b) agisse comme une paroi d'arrêt pour intercepter un transporteur (5) en transit, tandis que la surface avant (12a) pousse le transporteur intercepté (5) dans la ligne de tri respective (100) pendant le second mouvement vers l'avant susmentionné de l'élément de déviation (12).

10. Procédé selon la revendication 8 ou 9, **caractérisé en ce que**, pendant ledit second mouvement vers l'avant, la vitesse de l'élément de déviation (12) augmente progressivement, avec une accélération constante de l'ordre de 740 - 760 mm/s², de préférence 750 mm/s².
